# EUROPÄISCHE PATENTSCHRIFT

(11) **EP 4 357 432 B1**
(45) Veröffentlichungstag und Bekanntmachung des Hinweises auf die Patenterteilung: **04.06.2025**
(21) Anmeldenummer: 23196829.8
(22) Anmeldetag: 12.09.2023
(51) Int. Cl.: C09D 183/04, C08K 3/22, C08K 3/36, C08K 3/04, C08K 3/34

(54) **PARTIKELHALTIGE ZUSAMMENSETZUNG ZUR HERSTELLUNG VERSCHLEISSARMER ANTIADHÄSIVER BESCHICHTUNGEN**
PARTICLE CONTAINING COMPOSITION FOR PRODUCING ANTIADHESIVE COATINGS WITH LOW WEAR
COMPOSITION CONTENANT DES PARTICULES POUR LA PRODUCTION DE REVÊTEMENTS ANTI-ADHÉSIFS À FAIBLE USURE

(30) Priorität: 18.10.2022 EP 22202057
(43) Veröffentlichungstag der Anmeldung: 24.04.2024
(73) Patentinhaber: Heidelberger Druckmaschinen AG, 69115 Heidelberg (DE)
(72) Erfinder: Kraft, Marina, 69190 Walldorf (DE)

(56) Entgegenhaltungen:
- EP-B1- 1 672 042
- JP-A- 2008 273 991
- US-B2- 9 321 078

## Beschreibung

Die vorliegende Erfindung betrifft eine Zusammensetzung zur Herstellung partikelhaltiger Beschichtungen, die Verwendung solcher Zusammensetzungen zur Beschichtung von Oberflächen und ein mit der Zusammensetzung beschichtetes Erzeugnis für eine Druckmaschine.

In den verschiedenen Maschinen der grafischen Industrie für Druckvorstufe, Druckherstellung und Druckweiterverarbeitung werden Bedruckstoffe, beispielsweise Papier, Karton oder Folie, gefördert und verarbeitet. Das Fördern von Bedruckstoffen in Druckmaschinen kann mittels rotierender Zylinder erfolgen, welche zu diesem Zweck Bedruckstoff-kontaktierende Oberflächen aufweisen, entweder in Form beschichteter Zylinder oder in Form von wechselbaren Aufzügen für Zylinder, die man auch als Zylinderaufzüge oder "Jackets" bezeichnet. Für diese Bedruckstoff-kontaktierenden Oberflächen sind in der Regel zwei Eigenschaften wünschenswert: zum einen antiadhäsive, also farbabweisende, lackabweisende und schmutzabweisende, Eigenschaften, und zum anderen sollen diese Oberflächen möglichst verschleißbeständig sein, so dass ein Austausch nur selten erforderlich ist. Die bekannten Oberflächenbeschichtungen für Bedruckstoff-kontaktierende Oberflächen sind in der Regel nicht glatt, sondern weisen eine gewisse Rauheit auf. Dadurch sollen unter anderem die Auflagefläche für den Bedruckstoff verringert und die genannten Oberflächeneigenschaften hinsichtlich Antiadhäsivität und Verschleißbeständigkeit besser zum Tragen kommen.

Im Stand der Technik sind prinzipiell verschiedene Möglichkeiten zur Herstellung antiadhäsiver und verschleißbeständiger Oberflächen für Druckmaschinenzylinder beschrieben. Neben galvanischen Verfahren, Präge- und Laserverfahren, thermischen Spritzverfahren und Kombinationen davon können insbesondere auch Sol-Gel-Verfahren Anwendung finden.

Zusammensetzungen zur Herstellung antiadhäsiver und abriebbeständiger Beschichtungen für Druckmaschinenzylinder auf Grundlage der Sol-Gel-Technologie unter Verwendung von Siliciumoxidsolen und unter Beimischung von harten Feststoffpartikeln sind im Stand der Technik prinzipiell beschrieben.

DE 10 2012 004 278 A1 beschreibt abriebbeständige und antiadhäsive Oberflächenbeschichtungen für Druckmaschinenzylinder auf Grundlage von Sol-Gel-Verfahren.

DE 10 2011 010 718 A1 beschreibt Zusammensetzungen zur Herstellung von abriebbeständigen und antiadhäsiven Beschichtungen für Druckmaschinenzylinder mittels Sol-Gel-Technologie, wobei die beschichteten Oberflächen harte Mikropartikel umfassen.

Das Dokument US9321078 offenbart eine Sol-Gel-Matrix und Partikel mit einer Größe von 1 bis 5 Mikrometern sowie Agglomerate mit einer Größe von 10 bis 50 Mikrometern.

Es besteht weiterhin Bedarf an Zusammensetzungen umfassend harte Feststoffpartikel, mit denen sich Oberflächenbeschichtungen auf Druckmaschinenzylindern oder Oberflächenbeschichtungen auf Zylinderaufzügen für Druckmaschinenzylinder herstellen lassen, die neben ihren antiadhäsiven Eigenschaften einen geringeren Abrieb und damit eine höhere Verschleißbeständigkeit aufweisen.

Es ist daher Aufgabe der vorliegenden Erfindung, Zusammensetzungen anzugeben, mit denen sich besonders verschleißbeständige Bedruckstoff-kontaktierende Oberflächen umfassend harte Feststoffpartikel mit gleichzeitig praxistauglichen antiadhäsiven Eigenschaften herstellen lassen.

Überraschenderweise wurde nun gefunden, dass Beschichtungen, die man aus Mischungen von Siliciumoxidsolen umfassend harte Feststoffpartikel mit Teilchengrößen von einerseits zwischen 1 und 2 µm und andererseits von weniger als 1 µm herstellt, antiadhäsiv und besonders abriebfest sind, wenn man die beiden unterschiedlich großen Feststoffpartikeltypen in dem etwa gleichen Mischungsverhältnis einsetzt. Solche partikelhaltigen Beschichtungen weisen für den Praxiseinsatz besonders geeignete Rauheitsparameter auf, insbesondere optimale Rp- und Rk-Werte.

Mit den erfindungsgemäßen Zusammensetzungen lassen sich Bedruckstoff-kontaktierende partikelhaltige Beschichtungen herstellen, die aufgrund ihrer antiadhäsiven und besonders verschleißarmen Eigenschaften besonders viele Druckdurchgänge überstehen, ohne sich abzunutzen. Beschichtungen auf Druckmaschinenzylindern und beschichtete Zylinderaufzüge für Druckmaschinenzylinder lassen sich mit diesen Zusammensetzungen vergleichsweise einfach und kostengünstig herstellen. Es müssen keine aufwendigen und teuren galvanischen Verfahren, Präge- und Laserverfahren sowie thermischen Spritzverfahren zur Anwendung kommen.

Dementsprechend betrifft ein erster Aspekt der vorliegenden Erfindung eine Zusammensetzung zur Herstellung partikelhaltiger Beschichtungen, umfassend die folgenden Komponenten A) und B):
A) wenigstens eine Sol-Gel-Präkursorverbindung und
B) Feststoffpartikel P1), die einen Sauterdurchmesser d₃₂ im Bereich von 1,0 µm bis 2,0 µm, gemessen mittels dynamischer Lichtstreuung, aufweisen und Feststoffpartikel P2), die einen Sauterdurchmesser d₃₂ von weniger als 1,0 µm, gemessen mittels dynamischer Lichtstreuung, aufweisen,
wobei das Mengenverhältnis der Feststoffpartikel P1) zu den Feststoffpartikeln P2) im Bereich von 1,5 : 1 bis 1 : 1,5 liegt.

In einer bevorzugten Ausführungsform weisen die Feststoffpartikel P1) einen Sauterdurchmesser d₃₂ im Bereich von 1,0 µm bis 2,0 µm, gemessen mittels dynamischer Lichtstreuung, auf und die Feststoffpartikel P2) weisen einen Sauterdurchmesser d₃₂ von weniger als 0,5 µm, gemessen mittels dynamischer Lichtstreuung, auf. In einer besonders bevorzugten Ausführungsform weisen die Feststoffpartikel P1) einen Sauterdurchmesser d₃₂ im Bereich von 1,1 µm bis 1,8 µm, gemessen mittels dynamischer Lichtstreuung, bevorzugt im Bereich von 1,2 µm bis 1,6 µm, gemessen mittels dynamischer Lichtstreuung, auf und die Feststoffpartikel P2) weisen einen Sauterdurchmesser d₃₂ von weniger als 0,5 µm, gemessen mittels dynamischer Lichtstreuung, auf.

In einer weiteren bevorzugten Ausführungsform weisen die Feststoffpartikel P1) einen Sauterdurchmesser d₃₂ im Bereich von 1,0 µm bis 2,0 µm, gemessen mittels dynamischer Lichtstreuung, auf und die Feststoffpartikel P2) weisen einen Sauterdurchmesser d₃₂ im Bereich von 0,01 µm bis 0,5 µm, gemessen mittels dynamischer Lichtstreuung, bevorzugt im Bereich von 0,05 µm bis 0,5 µm, gemessen mittels dynamischer Lichtstreuung, auf. In einer besonders bevorzugten Ausführungsform weisen die Feststoffpartikel P1) einen Sauterdurchmesser d₃₂ im Bereich von 1,1 µm bis 1,8 µm, gemessen mittels dynamischer Lichtstreuung, bevorzugt im Bereich von 1,2 µm bis 1,6 µm, gemessen mittels dynamischer Lichtstreuung, auf und die Feststoffpartikel P2) weisen einen Sauterdurchmesser d₃₂ im Bereich von 0,01 µm bis 0,5 µm, gemessen mittels dynamischer Lichtstreuung, bevorzugt im Bereich von 0,05 µm bis 0,5 µm, gemessen mittels dynamischer Lichtstreuung, auf.

Der Sauterdurchmesser d₃₂ ist dem Fachmann prinzipiell bekannt. Dieser beschreibt den berechneten Durchmesser von fiktiven Kugeln, welchen man erhält, indem man das Gesamtvolumen des Kollektivs der betrachteten einzelnen Feststoffpartikel P1) oder P2) rechnerisch in gleich große Kugeln umformt, welche in Summe das gleiche Volumen und die gleiche Oberfläche wie das Kollektiv der betrachteten einzelnen Feststoffpartikel P1) oder P2) besitzen. Die Bestimmung des Sauterdurchmessers d₃₂ erfolgt gemäß DIN ISO 13320 durch dynamische Lichtstreuung.

Die Feststoffpartikel P1) und P2) weisen jeweils bevorzugt ein Aspektverhältnis von weniger als 5 : 1, besonders bevorzugt von weniger als 3 : 1 und ganz besonders bevorzugt von weniger als 2 : 1 auf. In einer bevorzugten Ausführungsform weisen die Feststoffpartikel P1) und P2) jeweils eine annähernd kugelförmige Struktur auf.

Erfindungsgemäß liegt in Komponente B) das Mengenverhältnis der Feststoffpartikel P1) zu den Feststoffpartikeln P2) im Bereich von 1,5 : 1 bis 1 : 1,5, bevorzugt im Bereich von 1,3 : 1 bis 1 : 1,3 und besonders bevorzugt im Bereich von 1,1 : 1 bis 1 : 1,1. Unter dem Mengenverhältnis wird hierbei das zahlenmäßige Mengenverhältnis verstanden. Mit anderen Worten, in Komponente B) liegt besonders bevorzugt in etwa die gleiche Zahl an Feststoffpartikeln P1) und Feststoffpartikeln P2) und allenfalls ein geringer zahlenmäßiger Überschuss einer der beiden Feststoffpartikel P1) oder P2) vor.

Die erfindungsgemäße Zusammensetzung zur Herstellung partikelhaltiger Beschichtungen umfasst die Feststoffpartikel P1) bevorzugt in einer Menge im Bereich von 1 bis 40 Gew.-%, besonders bevorzugt im Bereich von 2 bis 30 Gew.-% und ganz besonders bevorzugt im Bereich von 5 bis 20 Gew.-%, bezogen auf die gesamte Zusammensetzung, und die Feststoffpartikel P2) bevorzugt in einer Menge im Bereich von 0,5 bis 35 Gew.-%, besonders bevorzugt im Bereich von 1 bis 25 Gew.-% und ganz besonders bevorzugt im Bereich von 2 bis 20 Gew.-%, bezogen auf die gesamte Zusammensetzung.

In einer bevorzugten Ausführungsform liegt die Menge der Komponente B), also die Menge der Feststoffpartikel P1) zuzüglich der Menge der Feststoffpartikel P2), im Bereich von 2 bis 50 Gew.-%, bevorzugt im Bereich von 3 bis 40 Gew.-% und besonders bevorzugt im Bereich von 5 bis 30 Gew.-%, bezogen auf die gesamte Zusammensetzung.

Bei den in den erfindungsgemäßen Zusammensetzungen eingesetzten Feststoffpartikeln P1) und P2) handelt es sich um harte Feststoffpartikel. In einer bevorzugten Ausführungsform weisen die Feststoffpartikel P1) und die Feststoffpartikel P2) jeweils eine Mohs'sche Härte von 7 oder mehr auf.

Die Feststoffpartikel P1) können allesamt aus dem gleichen Material bestehen oder eine Mischung aus unterschiedlichen Materialien sein. Außerdem können die Feststoffpartikel P2) allesamt aus dem gleichen Material bestehen oder eine Mischung aus unterschiedlichen Materialien sein. In einer bevorzugten Ausführungsform bestehen die Feststoffpartikel P1) allesamt aus einem gleichen Material. In einer weiteren bevorzugten Ausführungsform bestehen die Feststoffpartikel P2) allesamt aus einem gleichen Material. In einer besonders bevorzugten Ausführungsform bestehen sowohl die Feststoffpartikel P1) als auch die Feststoffpartikel P2) allesamt aus dem gleichen Material.

In einer bevorzugten Ausführungsform sind die Feststoffpartikel P1) und die Feststoffpartikel P2) jeweils unabhängig voneinander ausgewählt unter Quarz-Partikeln, Korund-Partikeln, Siliciumcarbid-Partikeln, Diamant-Partikeln und Mischungen davon. In einer besonders bevorzugten Ausführungsform sind die Feststoffpartikel P1) und die Feststoffpartikel P2) jeweils ausgewählt unter Siliciumcarbid-Partikeln.

Die erfindungsgemäßen Zusammensetzungen umfassen als Komponente A) wenigstens eine Sol-Gel-Präkursorverbindung. Präkursorverbindungen für Sol-Gel-Verfahren sind dem Fachmann prinzipiell bekannt. Es handelt sich dabei um Ausgangsverbindungen für den Sol-Gel-Prozess. Dabei handelt es sich um Verbindungen, die in der Regel durch Hydrolyse und/oder Kondensation vernetzen und Gele bilden. Durch im Stand der Technik prinzipiell beschriebene Weiterverarbeitungsschritte lassen sich aus den erhaltenen Gelen dann trockene Oberflächenbeschichtungen erzeugen.

Dementsprechend ist in einer bevorzugten Ausführungsform der Erfindung die Komponente A) hydrolysierbar und/oder kondensierbar.

In einer weiteren bevorzugten Ausführungsform umfasst die Komponente A) wenigstens eines der Elemente B, Si, Al, Zr und Ti, bevorzugt wenigstens eines der Elemente Si und Ti. In einer besonders bevorzugten Ausführungsform umfasst die Komponente A) das Element Si.

In einer weiteren bevorzugten Ausführungsform umfasst die Komponente A) wenigstens ein Alkoxid, bevorzugt ein Alkoxid mit 1 bis 20 C-Atomen, besonders bevorzugt mit 1 bis 10 C-Atomen, bevorzugt Ethanolat, Propanolat oder Butanolat.

In einer bevorzugten Ausführungsform umfasst die Komponente A) wenigstens eine Verbindung, welche ausgewählt unter organischen Siliciumverbindungen. In einer besonders bevorzugten Ausführungsform umfasst die Komponente A) wenigstens eine organische Siliciumverbindung, die hydrolysierbar und/oder kondensierbar ist.

In einer weiteren bevorzugten Ausführungsform umfasst die Komponente A) wenigstens ein Siliciumoxidsol. Dem Fachmann sind Siliciumoxidsole prinzipiell bekannt. Es handelt sich hierbei um Sole auf Basis von Silicium, welche industriell beispielsweise in Sol-Gel-Verfahren zur Herstellung fester Oberflächenbeschichtungen aus kolloidalen Dispersionen verwendet werden. Siliciumoxidsole sind beispielsweise in DE 100 04 132 A1, DE 199 52 323 A1 und den darin genannten Verweisen beschrieben. Solche Siliciumoxidsole sind beispielsweise von der Fa. FEW Chemicals GmbH, Bitterfeld-Wolfen, Deutschland kommerziell erhältlich.

In einer weiteren bevorzugten Ausführungsform umfasst die Komponente A) wenigstens eine Verbindung, die ausgewählt unter Verbindungen der Formel (I)

R¹ₐSi(R²)₄₋ₐ (I)

worin
- a: für 1, 2 oder 3 steht,
- R¹: unabhängig voneinander für einen gesättigten oder ungesättigten Kohlenwasserstoffrest mit 1 bis 20 C-Atomen, der eine oder mehrere Doppelbindungen und/oder Dreifachbindungen aufweisen kann und der substituiert oder unsubstituiert sein kann, steht,
- R²: unabhängig voneinander für H, Halogen oder OR⁴ steht, wobei R⁴ für einen gesättigten oder ungesättigten Kohlenwasserstoffrest mit 1 bis 20 C-Atomen, der eine oder mehrere Doppelbindungen und/oder Dreifachbindungen aufweisen kann und der substituiert oder unsubstituiert sein kann, steht
und deren Hydrolyseprodukten und Kondensationsprodukten.

In einer besonders bevorzugten Ausführungsform umfasst die Komponente A) wenigstens eine Verbindung, welche ausgewählt unter Verbindungen der oben genannten Formel (I), worin
- R¹: unabhängig voneinander für C₁-C₂₀-Alkyl, C₂-C₂₀-Alkenyl, C₂-C₂₀-Alkinyl, C₆-C₁₄-Aryl, C₇-C₂₀-Arylalkyl, C₇-C₂₀-Alkylaryl, C₈-C₂₀-Arylalkenyl, C₈-C₂₀-Alkenylaryl, C₈-C₂₀-Arylalkinyl oder C₈-C₂₀-Alkinylaryl steht, wobei die Reste R¹ einen oder mehrere Substituenten tragen können, die ausgewählt sind unter Halogenen und gegebenenfalls substituierten Aminogruppen, Aldehydgruppen, Ketogruppen, C₁-C₂₀-Alkylcarbonylgruppen, Carboxygruppen, Mercaptogruppen, Cyanogruppen, Hydroxygruppen, C₁-C₂₀-Alkoxygruppen, C₁-C₂₀-Alkoxycarbonylgruppen, Sulfonsäuregruppen, Phosphorsäuregruppen, Acryloxygruppen, Methacryloxygruppen, Epoxygruppen und Vinylgruppen,
- R²: unabhängig voneinander für H, Halogen, C₁-C₂₀-Alkoxy, C₆-C₁₄-Aryloxy oder C₁-C₂₀-Alkoxy-C₁-C₂₀-alkoxy steht
und deren Hydrolyseprodukten und Kondensationsprodukten.

In einer ganz besonders bevorzugten Ausführungsform umfasst die Komponente A) wenigstens eine Verbindung, die ausgewählt unter Verbindungen der oben genannten Formel (I), worin
- R¹: unabhängig voneinander ausgewählt ist unter 3-Aminopropyl, 3-Glycidoxypropyl, 3-Methacryloxypropyl, N-(2-Aminoethyl)-3-aminopropyl, 3-Mercaptopropyl, 3-Isocyanatopropyl und 3-(C₁-C₂₀-Alkyl)-carbamatopropyl.

In einer weiteren ganz besonders bevorzugten Ausführungsform umfasst die Komponente A) wenigstens eine Verbindung, welche ausgewählt unter Verbindungen der oben genannten Formel (I), worin
- R²: unabhängig voneinander ausgewählt ist unter Chlor, C₁-C₁₀-Alkoxy, C₁-C₁₀-Alkoxy-C₁-C₁₀-alkoxy und C₆-C₁₀-Aryloxy.

In einer bevorzugten Ausführungsform weist die erfindungsgemäße Zusammensetzung die Komponente A) in einer Menge im Bereich von 10 bis 99 mol-%, bevorzugt im Bereich von 20 bis 90 mol-%, bezogen auf die gesamte Zusammensetzung, auf.

In einer weiteren bevorzugten Ausführungsform weist die erfindungsgemäße Zusammensetzung die Komponente A) in einer Menge im Bereich von 10 bis 99 Gew.-%, bevorzugt im Bereich von 20 bis 80 Gew.-%, bezogen auf die gesamte Zusammensetzung, auf.

In einer weiteren bevorzugten Ausführungsform umfasst die erfindungsgemäße Zusammensetzung eine weitere Komponente, die ausgewählt ist unter der Komponente C)
C) wenigstens eine Verbindung der Formel (II)

M(OR³)ₙ (II)

worin
n für 2, 3 oder 4 steht,
M für B, Al, Si, Ti oder Zr steht,
R³ unabhängig voneinander für C₁-C₂₀-Alkyl, C₆-C₁₄-Aryl, C₁-C₂₀-Acyl oder C₁-C₂₀-Alkoxy-C₁-C₂₀-alkyl steht
und deren Hydrolyseprodukten und Kondensationsprodukten.

In einer besonders bevorzugten Ausführungsform ist die wenigstens eine Verbindung der Formel (II) ausgewählt unter Tetra-C₁-C₂₀-alkoxysilanen. In einer ganz besonders bevorzugten Ausführungsform ist die wenigstens eine Verbindung der Formel (II) ausgewählt unter Tetraethoxysilan, Tetramethoxysilan und Tetra-i-propylsilan, speziell handelt es sich um Tetraethoxysilan.

In einer bevorzugten Ausführungsform weist die erfindungsgemäße Zusammensetzung die Komponente C) in einer Menge im Bereich von 0,1 bis 90 mol-%, bevorzugt im Bereich von 1 bis 80 mol-%, bezogen auf die gesamte Zusammensetzung, auf.

In einer weiteren bevorzugten Ausführungsform weist die erfindungsgemäße Zusammensetzung die Komponente C) in einer Menge im Bereich von 1 bis 90 Gew.-%, bevorzugt im Bereich von 10 bis 70 Gew.-%, bezogen auf die gesamte Zusammensetzung, auf.

In einer weiteren bevorzugten Ausführungsform umfasst die erfindungsgemäße Zusammensetzung eine weitere Komponente, die ausgewählt ist unter der Komponente D)
D) wenigstens eine fluorhaltige organische Verbindung, die ausgewählt ist unter fluorhaltigen Polyethern und organischen Siliciumverbindungen mit wenigstens einer fluorhaltigen Seitenkette
und deren Hydrolyseprodukten und Kondensationsprodukten.

In einer besonders bevorzugten Ausführungsform umfasst die Komponente D) wenigstens eine organische Siliciumverbindung mit wenigstens einer fluorhaltigen Seitenkette und wenigstens einen über eine Kohlenwasserstoffkette angebundenen hydrolysierbaren Silyl-Rest. In einer weiteren besonders bevorzugten Ausführungsform umfasst die Komponente D) fluorhaltige Polyether, welche Struktureinheiten umfassen, die ausgewählt sind unter Tetrafluorethylenoxid-Einheiten und Hexafluorpropylenoxid-Einheiten. In einer ganz besonders bevorzugten Ausführungsform umfasst die Komponente D) fluorhaltige Polyether, welche Struktureinheiten umfassen, die ausgewählt sind unter Tetrafluorethylenoxid-Einheiten und Hexafluorpropylenoxid-Einheiten, und wenigstens einen über eine Kohlenwasserstoffkette angebundenen hydrolysierbaren Silyl-Rest.

In einer bevorzugten Ausführungsform weist die erfindungsgemäße Zusammensetzung die Komponente D) in einer Menge im Bereich von 0,05 bis 20 mol-%, bevorzugt in einer Menge im Bereich von 1 bis 10 mol-%, bezogen auf die gesamte Zusammensetzung, auf.

In einer weiteren bevorzugten Ausführungsform weist die erfindungsgemäße Zusammensetzung die Komponente D) in einer Menge im Bereich von 0,1 bis 60 Gew.-%, bevorzugt im Bereich von 5 bis 50 Gew.-%, bezogen auf die gesamte Zusammensetzung, auf.

Die erfindungsgemäßen Zusammensetzungen lassen sich beispielsweise dadurch herstellen, dass man eine erste Zusammensetzung bereitstellt, welche eine Komponente A) und Feststoffpartikel P1) umfasst, und eine zweite Zusammensetzung bereitstellt, welche eine Komponente A) und Feststoffpartikel P2) umfasst, und die erste Zusammensetzung und die zweite Zusammensetzung miteinander mischt, beispielsweise durch Verrühren.

Ein weiterer Gegenstand der vorliegenden Erfindung ist die Verwendung einer erfindungsgemäßen Zusammensetzung zur Beschichtung von Metalloberflächen, Keramikoberflächen, Kunststoffoberflächen, Glasoberflächen, Steinoberflächen, Holzoberflächen und Kombinationen davon. Die Beschichtung kann nach im Stand der Technik für Sol-Gel-Beschichtungen prinzipiell beschriebenen Verfahren erfolgen, beispielsweise durch Sprühen, Tauchen, Gießen und dergleichen.

Ein weiterer Gegenstand der vorliegenden Erfindung ist ein beschichtetes Erzeugnis für eine Druckmaschine, das während eine Druckvorgangs wenigstens zeitweise einen Bedruckstoff mit einer Kontaktfläche berührt, wobei die Kontaktfläche wenigstens in Teilbereichen mit einer erfindungsgemäßen Zusammensetzung beschichtet wurde. In einer bevorzugten Ausführungsform handelt es sich bei dem erfindungsgemäßen beschichteten Erzeugnis für eine Druckmaschine um einen wechselbaren Zylinderaufzug für einen bogentransportierenden Zylinder einer Rotationsdruckmaschine oder einen bogentransportierenden Zylinder einer Rotationsdruckmaschine.

Die Herstellung eines erfindungsgemäßen beschichteten Erzeugnisses, nämlich eines wechselbaren Zylinderaufzugs, kann beispielsweise durch folgende Vorgehensweise erfolgen: Man stellt eine glatte Grundplatte aus Edelstahl, Kunststoff, Messing oder Aluminium mit einer Dicke von weniger als 0,5 µm bereit, welche man durch Anschleifen mit einem Handschleifgerät aufraut, um über die Erhöhung des Oberflächenvolumens eine bessere Haftung der darüberliegenden Schichten zu erzielen. Alternativ lassen sich auch maschinelle Schleifverfahren, Ätzverfahren und/oder Laserverfahren anwenden. Anschließend bringt man zur Haftverbesserung der darüberliegenden Schicht eine Haftvermittlerschicht, die auch als Primer bezeichnet werden kann, auf, beispielsweise durch Sprühen. Danach wird eine erfindungsgemäße Zusammensetzung umfassend ein Siliciumoxidsol und Siliciumcarbid-Partikel als P1) und P2) aufgetragen, beispielsweise durch Sprühen. Dabei wird die gleiche zahlenmäßige Menge an Siliciumcarbid-Partikeln P1) und Siliciumcarbid-Partikeln P2) eingesetzt, also im Mengenverhältnis 1 : 1. Anschließend wird die aufgesprühte Beschichtung thermisch im Temperaturbereich von 160 bis 180 °C getrocknet. Danach werden eine oder mehrere Schichten Siliciumoxidsol, bevorzugt zwei Schichten Siliciumoxidsol, aufgetragen, denen keine Feststoffpartikel zugesetzt wurden, beispielsweise durch Sprühen. Diese Deckschichten führen zu einer noch höheren Verschleißbeständigkeit des Zylinderaufzugs. Alternativ oder zusätzlich zu der Siliciumoxidsol-Deckschicht können auch eine oder mehrere Schichten Silicon aufgetragen werden. Auch die aufgetragenen Deckschichten werden thermisch im Temperaturbereich von 160 bis 180 °C getrocknet. Als Ergebnis erhält man einen Zylinderaufzug für eine Rotationsdruckmaschine, der erst nach deutlich über einer Million Druckvorgängen wegen mechanischer Abnutzung ausgetauscht werden muss.

Alternativ kann direkt ein Zylinder für eine Rotationsdruckmaschine aufgeraut, mit Haftvermittler versehen, der erfindungsgemäßen Zusammensetzung beschichtet und mit einer oder mehreren Deckschichten versehen werden, durch ähnliche wie bereits für den Zylinderaufzug genannte Verfahren. Als Ergebnis erhält man dann einen Druckmaschinenzylinder für den Transport von Druckbogen, der erst nach deutlich über einer Million Druckvorgängen abgenutzt ist und aus der Druckmaschine ausgewechselt werden muss.

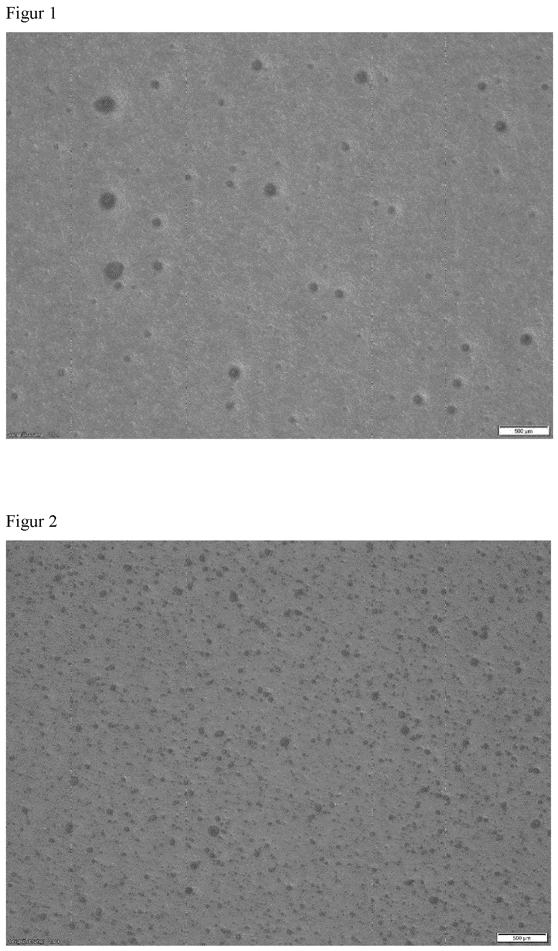

Figur 1 zeigt eine fotografische Aufnahme eines Zylinderaufzugs, der nach dem oben beschriebenen Verfahren hergestellt wurde. Dabei wurde ein Siliciumoxidsol eingesetzt, welches nur Feststoffpartikel P1) umfasste, nämlich Siliciumcarbid-Partikel, die einen Sauterdurchmesser d₃₂ im Bereich von 1,0 µm bis 2,0 µm aufwiesen. Die Oberflächenstruktur war für den Praxiseinsatz in der Druckmaschine nicht gut geeignet.
Figur 2 zeigt eine fotografische Aufnahme eines Zylinderaufzugs, der nach dem oben beschriebenen Verfahren hergestellt wurde. Dabei wurde ein Siliciumoxidsol eingesetzt, welches nur Feststoffpartikel P2) umfasste, nämlich Siliciumcarbid-Partikel, die einen Sauterdurchmesser d₃₂ von weniger als 1,0 µm aufwiesen. Die Oberflächenstruktur war für den Praxiseinsatz in der Druckmaschine nicht gut geeignet.

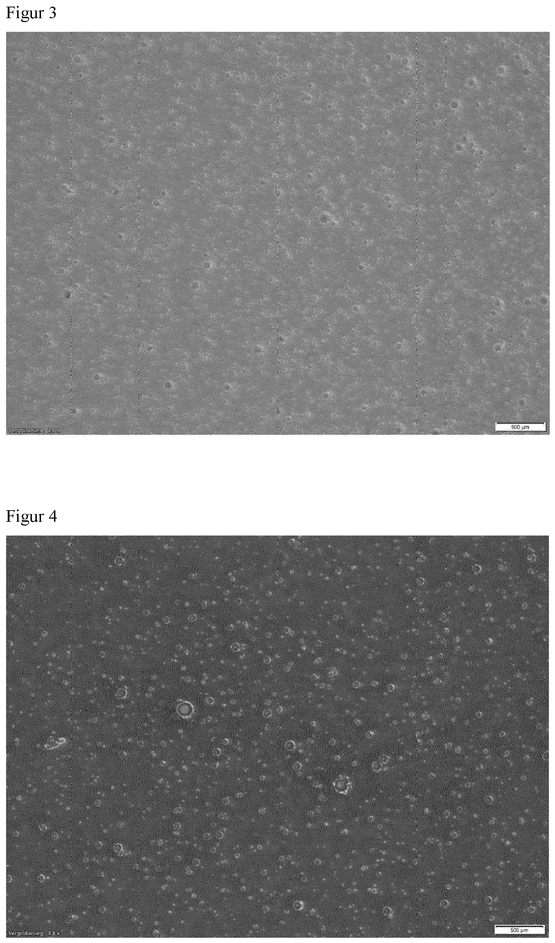

Figur 3 zeigt eine fotografische Aufnahme eines Zylinderaufzugs, der nach dem oben beschriebenen Verfahren hergestellt wurde. Dabei wurde ein Siliciumoxidsol mit Siliciumcarbid-Partikeln eingesetzt, und zwar eine 2 : 1-Mischung von Feststoffpartikeln P2) zu Feststoffpartikeln P1). Die Oberflächenstruktur war für den Praxiseinsatz in der Druckmaschine nicht gut geeignet.
Figur 4 zeigt eine fotografische Aufnahme des in Figur 3 abgebildeten Zylinderaufzugs, wobei der Zylinderaufzug zusätzlich mit eine Sol-Gel-Schutzschicht ohne Zusatz von Feststoffpartikeln beschichtet wurde. Die Oberflächenstruktur war für den Praxiseinsatz in der Druckmaschine nicht gut geeignet.

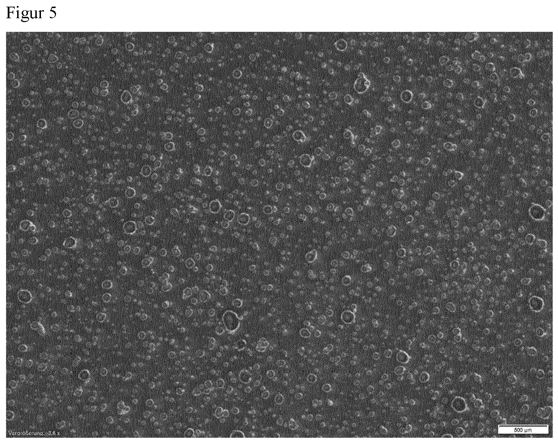

Figur 5 zeigt eine fotografische Aufnahme eines erfindungsgemäßen Zylinderaufzugs, der nach dem oben beschriebenen Verfahren hergestellt wurde. Dabei wurde ein Siliciumoxidsol mit Siliciumcarbid-Partikeln eingesetzt, und zwar eine 1 : 1-Mischung von Feststoffpartikeln P2) zu Feststoffpartikeln P1), die zusätzlich mit zwei Sol-Gel-Schutzschichten ohne Zusatz von Feststoffpartikeln beschichtet wurde. Die Oberflächenstruktur war für den Praxiseinsatz in der Druckmaschine sehr gut geeignet.

## Patentansprüche

1. Zusammensetzung zur Herstellung partikelhaltiger Beschichtungen, umfassend die folgenden Komponenten:
A) wenigstens eine Sol-Gel-Präkursorverbindung und
B) Feststoffpartikel P1), die einen Sauterdurchmesser d₃₂ im Bereich von 1,0 µm bis 2,0 µm, gemessen mittels dynamischer Lichtstreuung, aufweisen und Feststoffpartikel P2), die einen Sauterdurchmesser d₃₂ von weniger als 1,0 µm, gemessen gemäß DIN ISO 13320 mittels dynamischer Lichtstreuung, aufweisen,
wobei das Mengenverhältnis der Feststoffpartikel P1) zu den Feststoffpartikeln P2) im Bereich von 1,5 : 1 bis 1 : 1,5 liegt.

2. Zusammensetzung nach Anspruch 1, wobei die Komponente A) hydrolysierbar und/oder kondensierbar ist.

3. Zusammensetzung nach einem der vorhergehenden Ansprüche, wobei die Komponente A) wenigstens eines der Elemente B, Si, Al, Zr und Ti umfasst.

4. Zusammensetzung nach einem der vorhergehenden Ansprüche, wobei die Komponente A) wenigstens ein Alkoxid umfasst.

5. Zusammensetzung nach einem der vorhergehenden Ansprüche, wobei die Komponente A) wenigstens eine organische Siliciumverbindung umfasst.

6. Zusammensetzung nach einem der vorhergehenden Ansprüche, wobei die Komponente A) wenigstens ein Siliciumoxidsol umfasst.

7. Zusammensetzung nach einem der vorhergehenden Ansprüche, wobei die Komponente A) wenigstens eine Verbindung umfasst, die ausgewählt ist unter organischen Siliciumverbindungen der Formel (I)
R¹ₐSi(R²)₄₋ₐ (I)
worin
a für 1, 2 oder 3 steht,
R¹ unabhängig voneinander für einen gesättigten oder ungesättigten Kohlenwasserstoffrest mit 1 bis 20 C-Atomen, der eine oder mehrere Doppelbindungen und/oder Dreifachbindungen aufweisen kann und der substituiert oder unsubstituiert sein kann, steht,
R² unabhängig voneinander für H, Halogen oder OR⁴ steht, wobei R⁴ für einen gesättigten oder ungesättigten Kohlenwasserstoffrest mit 1 bis 20 C-Atomen, der eine oder mehrere Doppelbindungen und/oder Dreifachbindungen aufweisen kann und der substituiert oder unsubstituiert sein kann, steht
und deren Hydrolyseprodukten und Kondensationsprodukten.

8. Zusammensetzung nach Anspruch 7, wobei die Komponente A) wenigstens eine Verbindung umfasst, die ausgewählt ist unter Verbindungen der Formel (I) gemäß Anspruch 7,
worin
R¹ unabhängig voneinander für C₁-C₂₀-Alkyl, C₂-C₂₀-Alkenyl, C₂-C₂₀-Alkinyl, C₆-C₁₄-Aryl, C₇-C₂₀-Arylalkyl, C₇-C₂₀-Alkylaryl, C₈-C₂₀-Arylalkenyl, C₈-C₂₀-Alkenylaryl, C₈-C₂₀-Arylalkinyl oder C₈-C₂₀-Alkinylaryl steht, wobei die Reste R¹ einen oder mehrere Substituenten tragen können, die ausgewählt sind unter Halogenen und gegebenenfalls substituierten Aminogruppen, Aldehydgruppen, Ketogruppen, C₁-C₂₀-Alkylcarbonylgruppen, Carboxygruppen, Mercaptogruppen, Cyanogruppen, Hydroxygruppen, C₁-C₂₀-Alkoxygruppen, C₁-C₂₀-Alkoxycarbonylgruppen, Sulfonsäuregruppen, Phosphorsäuregruppen, Acryloxygruppen, Methacryloxygruppen, Epoxygruppen und Vinylgruppen,
R² unabhängig voneinander für H, Halogen, C₁-C₂₀-Alkoxy, C₆-C₁₄-Aryloxy oder C₁-C₂₀-Alkoxy-C₁-C₂₀-alkoxy steht
und deren Hydrolyseprodukten und Kondensationsprodukten.

9. Zusammensetzung nach einem der vorhergehenden Ansprüche, wobei die Menge der Komponente A) im Bereich von 20 bis 80 Gew.-%, bezogen auf die gesamte Zusammensetzung, liegt.

10. Zusammensetzung nach einem der vorhergehenden Ansprüche, wobei die Feststoffpartikel P1) und die Feststoffpartikel P2) jeweils eine Mohs'sche Härte von 7 oder mehr aufweisen.

11. Zusammensetzung nach Anspruch 10, wobei die Feststoffpartikel P1) und die Feststoffpartikel P2) jeweils unabhängig voneinander ausgewählt sind unter Quarz-Partikeln, Korund-Partikeln, Siliciumcarbid-Partikeln, Diamant-Partikeln und Mischungen davon, insbesondere unter Siliciumcarbid-Partikeln.

12. Zusammensetzung nach einem der vorhergehenden Ansprüche, wobei die Menge der Komponente B) im Bereich von 5 bis 30 Gew.-%, bezogen auf die gesamte Zusammensetzung, liegt.

13. Verwendung einer Zusammensetzung nach einem der Ansprüche 1 bis 12 zur Beschichtung von Metalloberflächen, Keramikoberflächen, Kunststoffoberflächen, Glasoberflächen, Steinoberflächen, Holzoberflächen und Kombinationen davon.

14. Beschichtetes Erzeugnis für eine Druckmaschine, das während eine Druckvorgangs wenigstens zeitweise einen Bedruckstoff mit einer Kontaktfläche berührt, wobei die Kontaktfläche wenigstens in Teilbereichen mit einer Zusammensetzung nach einem der Ansprüche 1 bis 12 beschichtet wurde.

15. Beschichtetes Erzeugnis für eine Druckmaschine gemäß Anspruch 14, wobei es sich um einen wechselbaren Zylinderaufzug für einen bogentransportierenden Zylinder einer Rotationsdruckmaschine oder um einen bogentransportierenden Zylinder für eine Rotationsdruckmaschine handelt.

## Claims

1. A composition for producing particle-containing coatings comprising the following components:
A) at least one sol-gel precursor compound and
B) solid particles P1), which exhibit a Sauter diameter d₃₂ in the range of 1.0 µm to 2.0 µm, measured by dynamic light scattering, and solid particles P2), which exhibit a Sauter diameter d₃₂ of less than 1.0 µm, measured in accordance with DIN ISO 13320
by means of dynamic light scattering,
wherein the quantitative ratio of the solid particles P1) to the solid particles P2) is in the range of 1.5 : 1 to 1 : 1.5.

2. The composition according to claim 1, wherein component A) is hydrolyzable and/or condensable.

3. The composition according to any one of the preceding claims, wherein said component A) comprises at least one of the elements B, Si, Al, Zr and Ti.

4. The composition according to any one of the preceding claims, wherein said component A) comprises at least one alkoxide.

5. The composition according to any one of the preceding claims, wherein said component A) comprises at least one silicon compound.

6. The composition according to any one of the preceding claims, wherein said component A) comprises at least one silica sol.

7. The composition according to any one of the preceding claims, wherein said component A) comprises at least one compound selected from organic silicon compounds of formula (I)
R¹ₐSi(R²)₄₋ₐ (I)
wherein
a stands for 1, 2 or 3,
R¹ independently of one another represents a saturated or unsaturated hydrocarbon radical having 1 to 20 carbon atoms, which may contain one or more double bonds and/or triple bonds, and which may be substituted or unsubstituted,
R² independently of one another represents H, halogen or OR⁴, wherein R⁴ represents a saturated or unsaturated hydrocarbon radical having 1 to 20 carbon atoms, which may contain one or more double bonds and/or triple bonds, and which may be substituted or unsubstituted
and their hydrolysis products and condensation products.

8. The composition according to claim 7, wherein said component A) comprises at least one compound selected from compounds of formula (I) according to claim 7,
wherein
R¹ independently of one another represents C₁-C₂₀-alkyl, C₂-C₂₀-alkenyl, C₂-C₂₀ alkynyl, C₆-C₁₄ aryl, C₇-C₂₀ arylalkyl, C₇-C₂₀ alkylaryl, C₈-C₂₀ arylalkenyl, C₈-C₂₀ alkenylaryl, C₈-C₂₀ arylalkynyl or C₈-C₂₀ alkynylaryl, wherein the radicals R¹ may carry one or more substituents which are selected from halogens and optionally substituted amino groups, aldehyde groups, keto groups, C₁-C₂₀ alkylcarbonyl groups, carboxy groups, mercapto groups, cyano groups, hydroxy groups, C₁-C₂₀ alkoxygroups, C₁-C₂₀ alkoxycarbonyl groups, sulfonic acid groups, phosphoric acid groups, acryloxy groups, methacryloyloxy groups, epoxy groups and vinyl groups,
R² independently represents H, halogen, C₁₋C₂₀ alkoxy, C₆-C₁₄ aryloxy or C₁-C₂₀ alkoxy-C₁-C₂₀ alkoxy
and their hydrolysis products and condensation products.

9. The composition according to any one of the preceding claims, wherein the amount of said component A) is in the range from 20 to 80% by weight, based on the total composition.

10. The composition according to any one of the preceding claims, wherein said solid particles P1) and said solid particles P2) each have a Mohs hardness of 7 or more.

11. The composition according to claim 10, wherein said solid particles P1) and said solid particles P2) are each independently selected from quartz particles, corundum particles, silicon carbide particles, diamond particles and mixtures thereof, in particular from silicon carbide particles.

12. The composition according to any one of the preceding claims, wherein the amount of component B) is in the range of 5 to 30% by weight, based on the total composition.

13. Use of a composition according to any one of the claims 1 to 12 for coating metal surfaces, ceramic surfaces, plastic surfaces, glass surfaces, stone surfaces, wood surfaces and combinations thereof.

14. Coated product for a printing machine, which during a printing process at least temporarily contacts a printing substrate with a contact surface, wherein the contact surface has been coated at least in partial areas with a composition according to one of claims 1 to 12.

15. A coated product for a printing press in accordance with claim 14, wherein the product is an exchangeable cylinder jacket for a sheet-transporting cylinder of a rotary printing press or a sheet-transporting cylinder for a rotary printing press.

## Revendications

1. Composition pour la réalisation de revêtements chargés de particules, comprenant les composants suivants :
A) au moins un composé précurseur sol-gel, et
B) des particules solides P1), qui présentent un diamètre Sauter d₃₂ dans la plage de 1,0 µm à 2,0 µm, mesuré au moyen d'une diffusion dynamique de la lumière, et des particules solides P2), qui présentent un diamètre Sauter d₃₂ inférieur à 1,0 µm, mesuré selon DIN ISO 13320
au moyen d'une diffusion dynamique de la lumière,
le rapport quantitatif entre les particules solides P1) et les particules solides P2) se situant dans la plage de 1,5 : 1 à 1 : 1,5.

2. Composition selon la revendication 1, pour laquelle le composant A) est hydrolysable et/ou condensable.

3. Composition selon l'une quelconque des revendications précédentes, pour laquelle le composant A) comprend au moins l'un des éléments B, Si, Al, Zr et Ti.

4. Composition selon l'une quelconque des revendications précédentes, pour laquelle le composant A) comprend au moins un alcoxyde.

5. Composition selon l'une quelconque des revendications précédentes, pour laquelle le composant A) comprend au moins un composé organique du silicium.

6. Composition selon l'une quelconque des revendications précédentes, pour laquelle le composant A) comprend au moins un sol d'oxyde de silicium.

7. Composition selon l'une quelconque des revendications précédentes, pour laquelle le composant A) comprend au moins un composé sélectionné parmi les composés organiques du silicium de la formule (I)
R¹ₐSi(R²)₄₋ₐ (1)
où
a correspond à 1, 2 ou 3,
R¹ représente, de manière indépendante, un radical hydrocarboné saturé ou insaturé comportant de 1 à 20 atomes de carbone, pouvant comporter une ou plusieurs doubles liaisons et/ou triples liaisons et pouvant être substitué ou non substitué,
R² représente, de manière indépendante, H, un halogène ou OR⁴, R⁴ désignant un radical hydrocarboné saturé ou insaturé possédant de 1 à 20 atomes de carbone, pouvant comporter une ou plusieurs doubles liaisons et/ou triples liaisons et pouvant être substitué ou non substitué
et leurs produits d'hydrolyse et de condensation.

8. Composition selon la revendication 7, pour laquelle le composant A) comprend au moins un composé choisi parmi les composés de la formule (I) selon la revendication 7,
où
R¹ représente, de manière indépendante, un alkyle en C₁-C₂₀, un alcényle en C₂-C₂₀, un alcynyle en C₂-C₂₀, un aryle en C₆-C₁₄, un arylalkyle en C₇-C₂₀, un alkylaryle en C₇-C₂₀, un arylalcényle en C₈-C₂₀, un alcénylaryle en C₈-C₂₀, un arylalcynyle en C₈-C₂₀ ou un alcynylaryle en C₈-C₂₀, les radicaux R¹ pouvant porter un ou plusieurs substituants qui sont choisis parmi des halogènes et des groupes amino éventuellement substitués, des groupes aldéhyde, des groupes céto, des groupes alkylcarbonyle en C₁-C₂₀, des groupes carboxy, des groupes mercapto, des groupes cyano, des groupes hydroxy, des groupes alcoxy en C₁-C₂₀, des groupes alcoxycarbonyle en C₁-C₂₀, des groupes acide sulfonique, des groupes acide phosphorique, des groupes acryloxy, des groupes méthacryloxy, des groupes époxy et des groupes vinyle,
R² représente, de manière indépendante, H, un halogène, un alcoxy en C₁-C₂₀, un aryloxy en C₆-C₁₄ ou un alcoxy en C₁-C₂₀-alcoxy en C₁-C₂₀
et leurs produits d'hydrolyse et de condensation.

9. Composition selon l'une quelconque des revendications précédentes, pour laquelle la quantité de composant A) se situe dans la plage de 20 à 80 % en poids par rapport à la composition totale.

10. Composition selon l'une quelconque des revendications précédentes, pour laquelle les particules solides P1) et les particules solides P2) présentent chacune une dureté Mohs supérieure ou égale à 7.

11. Composition selon la revendication 10, pour laquelle les particules solides P1) et les particules solides P2) sont chacune indépendamment sélectionnées parmi des particules de quartz, des particules de corindon, des particules de carbure de silicium, des particules de diamant et des combinaisons de ces dernières, et plus particulièrement parmi des particules de carbure de silicium.

12. Composition selon l'une quelconque des revendications précédentes, pour laquelle la quantité de composant B) se situe dans la plage de 5 à 30 % en poids par rapport à la composition totale.

13. Utilisation d'une composition selon l'une quelconque des revendications 1 à 12 pour le revêtement de surfaces métalliques, de surfaces céramiques, de surfaces plastiques, de surfaces en verre, de surfaces en pierre, de surfaces en bois et de combinaisons de ces dernières.

14. Produit revêtu pour une machine à imprimer, qui, pendant une opération d'impression, est en contact au moins temporairement avec un support d'impression par une surface de contact, la surface de contact ayant été revêtue au moins dans des zones partielles d'une composition selon l'une des revendications 1 à 12.

15. Produit revêtu pour une machine à imprimer selon la revendication 14, où il s'agit d'un habillage de cylindre interchangeable pour un cylindre de transport de feuilles d'une machine à imprimer rotative ou bien d'un cylindre de transport de feuilles pour une machine à imprimer rotative.
